# EUROPEAN PATENT APPLICATION

(11) **EP 4 174 362 A1**
(43) Date of publication of application: **03.05.2023**
(21) Application number: 22204439.8
(22) Date of filing: 28.10.2022
(51) Int. Cl.: F17C 5/00, F17C 5/06

(54) **HYDROGEN STORAGE AND DISPENSING APPARATUS AND METHOD**

(30) Priority: 29.10.2021 US 202117514053
(71) Applicant: Air Products and Chemicals, Inc., Allentown, PA 18106-5500 (US)
(72) Inventor: Kyvelos, Anthony R., deceased (US); Cohen, Joseph P., Bethlehem, 18017 (US)
(74) Representative: SSM Sandmair

(57) **Abstract**

A hydrogen generator can adjust production as necessary depending on station usage. When the generator is running at a high output and there isn't enough usage from a dispenser, then excess hydrogen can be fed to storage in at least one trailer. As the generator attempts to match usage rates, it may slow down. If the production rate is slowed and the dispensing need for hydrogen subsequently increases, then the required additional supply can be provided from the at least one trailer until the generator ramps up output to meet the increased demand. The trailer storage can allow for matching of usage with production. At least one trailer can be maintained at each pressure level at a station to enable trailers to be removed as they become full or to be replaced as they become empty to match station demand and provide import and export capability.

## Description

### FIELD OF THE INVENTION

The innovation relates to apparatuses for on-site hydrogen fuel dispensing and storage and methods for providing on-site hydrogen fuel dispensing and storage.

### BACKGROUND OF THE INVENTION

Examples of hydrogen generation and supply systems can be appreciated from U.S. Patent Nos. 6,401,767, 6,619,336, 6,708,573, 6,745,801, 6,786,245, 7,028,724, 7,328,726, 7,793,675, 7,921,883, 8,020,589, 8,286,675, 8,365,777, 8,453,682, 8,899,278, 9,074,730, 9,151,448, 9,261,238, 9,279,541, 9,404,620, 9,863,583, 10,502,649, and 10,508,770.

Some hydrogen fueling systems are fed from trailers that are filled with hydrogen that is imported to the fueling station. Often, hydrogen fueling stations will go for many hours, if not most of the day, with no use at all. When in use, however, there can be great demand for the hydrogen at the fueling station. Often, abundant storage for the hydrogen fuel is provided so the station can meet the high demand when that demand is present.

### SUMMARY

Some hydrogen generation and supply systems can generate hydrogen on-site. For example, hydrogen can be produced from methane via reforming or hydrogen can be produced from ammonia via cracking. It was determined that the equipment that produces the hydrogen on-site can, in general, have a limited ability to adjust production speed. As a result, this equipment, in general, may not respond well to frequent starts and stops that can result from intermittent demand of hydrogen fuel at a fueling station for directly supplying the hydrogen fuel to the station for use in dispensing hydrogen fuel to vehicles or other devices.

It was determined that this limited ability to adjust speed of production may not match well with intermittent usage pattern of a fueling station. It was also determined that a production system that may be configured to directly supply fuel for dispensing it to vehicles or other devices on-site at a fueling station may need to either store the hydrogen gas that is made when not being dispensed or utilize the hydrogen in an alternative use when not being used for dispensing to other devices (e.g. vehicles that may run on hydrogen fuel).

On-site hydrogen generation systems for providing fuel to fueling systems having one or more fuel dispensers can be provided that are designed and configured to provide hydrogen generated in production for fuel dispensing and/or storage. When the hydrogen that is produced by a hydrogen generation system is greater than (or exceeds) a dispensing demand for the fueling station, the system can be configured so it can avoid having to vent generated hydrogen to atmosphere (and hence, lose or waste the hydrogen). This configuration can also help avoid having to deactivate the hydrogen generation system when there is excess demand, which could then lead to long delays in re-staring the hydrogen generation process when demand for hydrogen at the fueling station may unexpectedly increase. Preferably, embodiments are provided that permit the same connection that is used to offload excess hydrogen supply to also be used to supply backup hydrogen fuel when the on-site hydrogen generation system is off-line or otherwise providing an inadequate flow of hydrogen that is unable to meet the fueling station's current demand for dispensing hydrogen to vehicles or other devices. In some embodiments, the fueling system can be advantageously configured to facilitate both importation of hydrogen fuel to the fueling station and exportation hydrogen fuel to other customers at locations remote from the fueling station via one or more trailers (e.g. tube trailers). For example, excess production can be used to supply one or more trailers for being shipped via truck and/or train for shipping the fuel to other customers and/or supply trailers for on-site storage for subsequent use at the fueling station of the fueling system in some embodiments.

The one or more trailers that can be utilized can be removably connected for receiving excess hydrogen from a compressor for storage during low hydrogen demand time periods and also providing that stored hydrogen to a flow control manifold for distribution at one or more dispensers of the fueling station to meet high demand conditions at the fueling station. The one or more removable trailers can be removed once full for transport to another off-site station and replaced with one or more other empty trailer(s). Embodiments can also be configured so that additional full trailers can be connected to replace and/or supplement at least one trailer already connected to provide additional hydrogen to meet high demand occurrences at a fueling station. The removable and replaceable trailers can provide operational flexibility and permit that on-site generation of hydrogen to provide hydrogen for an on-site station while also permitting exportation of excess hydrogen. Embodiments can also permit the importation of additional hydrogen by adding one or more additional trailers or replacing an empty trailer with a full trailer to account for situations where demand for hydrogen at the on-site fueling station is high or is expected to be high.

A hydrogen fuel dispensing and storage apparatus can be provided. Embodiments of the hydrogen fuel dispensing and storage apparatus can include a first compressor positioned to receive hydrogen from a hydrogen generation system and a flow control manifold (FCM) positioned downstream of the first compressor to receive the hydrogen for feeding to at least one dispenser. The apparatus may comprise the at least one dispenser to dispense the hydrogen to a vehicle. The apparatus can also include at least one first trailer positioned between the first compressor and the FCM such that hydrogen output from the first compressor is feedable to the at least one first trailer for storage while a demand for hydrogen at the FCM for dispensing at the at least one dispenser is below a rate of hydrogen being fed to the first compressor and hydrogen from the at least one first trailer is passable to the FCM while the demand for hydrogen at the FCM for dispensing at the at least one dispenser is greater than the rate of hydrogen being fed to the first compressor. The at least one first trailer can be a single trailer or multiple trailers.

Some embodiments of the hydrogen fuel dispensing and storage apparatus can include additional compressors. For instance, some embodiments can include a second compressor positioned between the first compressor and the FCM to increase pressure of the hydrogen output from the second compressor from a first pressure to a second pressure that is higher than the first pressure before the hydrogen is fed to the FCM. The apparatus can also include other elements. For instance, a first storage vessel can be provided between the first compressor and the second compressor for storage of the hydrogen output from the first compressor prior to the hydrogen being fed to the second compressor. As another example, there can be a second storage vessel between the second compressor and the FCM for storage of the hydrogen output from the second compressor prior to the hydrogen being fed to the FCM for dispensing.

Embodiments of the hydrogen fuel dispensing and storage apparatus can include only a single first trailer or can include multiple first trailers. Some embodiments can also utilize one or more second trailers. For example, embodiments can include at least one second trailer positioned between a second compressor and the FCM such that hydrogen output from the second compressor at the second pressure is feedable to at least one second trailer for storage while a demand for hydrogen at the FCM for dispensing at the at least one dispenser is below a rate of hydrogen being fed to the first compressor and the hydrogen from the at least one second trailer is passable to the FCM while the demand for hydrogen at the FCM for dispensing at the at least one dispenser is greater than the rate of hydrogen being fed to the first compressor. It should be appreciated that the at least one second trailer can be a single trailer or can be multiple trailers. The respective first trailer and/or the respective second trailer can be a tube trailer or each a tube trailer in some embodiments.

In some embodiments, the at least one second trailer can be positioned and configured so that the hydrogen stored in the at least one second trailer is directly feedable to the FCM while the demand for hydrogen at the FCM for dispensing at the at least one dispenser is greater than the rate of hydrogen being fed to the first compressor. The at least one first trailer can be positioned and configured so that the hydrogen stored in the at least one first trailer is directly feedable to the FCM while the demand for hydrogen at the FCM for dispensing at the at least one dispenser is greater than the rate of hydrogen being fed to the first compressor. In embodiments utilizing both one or more first trailers and one or more second trailers, both sets of these trailer can be configured and positioned for directly feeding the FCM with hydrogen stored in the trailers to the FCM while the demand for hydrogen at the FCM for dispensing at the at least one dispenser is greater than the rate of hydrogen being fed to the first compressor.

The at least one first trailer can include at least one removable tube trailer or multiple removable tube trailers. The at least one second trailer can include at least one removable tube trailer or multiple removable tube trailers. The tube trailers and other types of removable trailers can be transportable via truck on roadways and/or via train on railways. Removable trailers can be replaced with other trailers. For instance, an empty trailer can be replaced with a full trailer full of hydrogen. As another example, a full trailer that is full of hydrogen can be removed and replaced with an empty trailer to receive additional hydrogen. Additional trailers can also be utilized in some embodiments to provide additional hydrogen storage capacity.

Some embodiments of the hydrogen fuel dispensing and storage apparatus can be configured as a hydrogen fuel generation, dispensing and storage apparatus that includes the hydrogen generation system. The hydrogen generation system included in such embodiments of the apparatus can include an ammonia cracker or a methane reformer that has at least one reformer device in some embodiments. Other embodiments may utilize other types of hydrogen generation systems.

A method of generating, storing and/or dispensing hydrogen is also provided. Embodiments of the method can include: compressing hydrogen received from hydrogen generation system to a first pressure and feeding the hydrogen to a flow control manifold (FCM) for feeding to at least one dispenser. In response to demand for hydrogen at the FCM for dispensing at the at least one dispenser being below a rate of hydrogen being fed to the first compressor, at least a portion of the hydrogen output from the first compressor can be fed to at least one first trailer positioned between the first compressor and the FCM such that hydrogen output from the first compressor is feedable to the at least one first trailer for storage. In response to the demand for hydrogen at the FCM for dispensing at the at least one dispenser being greater than the rate of hydrogen being fed to the first compressor, hydrogen stored in at least one first trailer can be fed to the FCM for dispensing at the at least one dispenser.

Embodiments of the method can include feeding the hydrogen at the first pressure to a second compressor positioned between the first compressor and the FCM to increase pressure of the hydrogen to a second pressure that is higher than the first pressure before the hydrogen is fed to the FCM. In response to the demand for hydrogen at the FCM for dispensing at the at least one dispenser being below a rate of hydrogen being fed to the first compressor, at least a portion of the hydrogen output from the second compressor can be fed to at least one second trailer positioned between the second compressor and the FCM such that hydrogen output from the first compressor is feedable to the at least one second trailer for storage. In response to the demand for hydrogen at the FCM for dispensing at the at least one dispenser being greater than the rate of hydrogen being fed to the first compressor, hydrogen stored in at least one second trailer can be output to the FCM for dispensing at the at least one dispenser.

In embodiments of the method, the at least one first trailer can be a single trailer or can be multiple trailers. In embodiments of the method that utilize at least one second trailer, the at least one second trailer can be a single trailer or multiple trailers. Each of the trailers can be a tube trailer or other type of trailer suitable for storage of hydrogen for transport along railways or roadways.

For embodiments of the method, the at least one first trailer can include at least one removable tube trailer or multiple removable tube trailers. The at least one second trailer can include at least one removable tube trailer or multiple removable tube trailers as well (when utilized). The tube trailers and other types of removable trailers can be transportable via truck on roadways and/or via train on railways. Removable trailers can be replaced with other trailers. For instance, an empty trailer can be replaced with a full trailer full of hydrogen. As another example, a full trailer that is full of hydrogen can be removed and replaced with an empty trailer to receive additional hydrogen. Additional trailers can also be utilized in some embodiments to provide additional hydrogen storage capacity.

In some embodiments of the method, at least one second trailer can be positioned and configured so that the hydrogen stored in the at least one second trailer is directly feedable to the FCM while the demand for hydrogen at the FCM for dispensing at the at least one dispenser is greater than the rate of hydrogen being fed to the first compressor. At least one first trailer can also be positioned and configured so that the hydrogen stored in the at least one first trailer is directly feedable to the FCM while the demand for hydrogen at the FCM for dispensing at the at least one dispenser is greater than the rate of hydrogen being fed to the first compressor.

In embodiments of the method that only use at least one first trailer, the at least one first trailer can be a single trailer or multiple trailers. The at least one first trailer can be positioned and configured so that the hydrogen stored in the at least one first trailer is directly feedable to the FCM while the demand for hydrogen at the FCM for dispensing at the at least one dispenser is greater than the rate of hydrogen being fed to the first compressor.

A hydrogen fuel generation, dispensing and storage apparatus is also provided. Embodiments of this apparatus can include a hydrogen generation system that includes an ammonia cracker or a methane reformer that has at least one reformer device. A first compressor can be positioned to receive hydrogen from the hydrogen generation system, at least one dispenser can be positioned to dispense the hydrogen to a vehicle, and a flow control manifold (FCM) can be positioned downstream of the first compressor and upstream of the at least one dispenser to receive the hydrogen for feeding to the at least one dispenser. Embodiments of the apparatus can also include a second compressor positioned between the first compressor and the FCM to increase pressure of the hydrogen output from the compressor from a first pressure to a second pressure that is higher than the first pressure before the hydrogen is fed to the FCM. Embodiments can also include a first storage vessel positioned between the first compressor and the second compressor for storage of the hydrogen output from the first compressor prior to the hydrogen being fed to the second compressor and a second storage vessel positioned between the second compressor and the FCM for storage of the hydrogen output from the second compressor prior to the hydrogen being fed to the FCM for dispensing.

Embodiments of the hydrogen fuel generation, dispensing and storage apparatus can also include at least one first trailer positioned between the first compressor and the FCM such that hydrogen output from the first compressor is feedable to the at least one first trailer for storage while a demand for hydrogen at the FCM for dispensing at the at least one dispenser is below a rate of hydrogen being fed to the first compressor and hydrogen from the at least one first trailer is passable to the FCM while the demand for hydrogen at the FCM for dispensing at the at least one dispenser is greater than the rate of hydrogen being fed to the first compressor.

Embodiments of the hydrogen fuel generation, dispensing and storage apparatus can also include at least one second trailer positioned between the second compressor and the FCM such that hydrogen output from the second compressor is feedable to the at least one second trailer for storage while a demand for hydrogen at the FCM for dispensing at the at least one dispenser is below a rate of hydrogen being fed to the first compressor and the hydrogen from the at least one second trailer is passable to the FCM while the demand for hydrogen at the FCM for dispensing at the at least one dispenser is greater than the rate of hydrogen being fed to the first compressor.

In some embodiments, the one or more first trailers can be configured to store hydrogen at a first pressure at which the hydrogen is output from the first compressor. The one or more second trailers can be configured to store hydrogen at a second pressure that is higher than the first pressure. The second pressure can be the pressure of hydrogen that is output from the second compressor, for example. In such embodiments, the first pressure may be considered a low pressure (LP) and the second pressure can be considered a moderate pressure (MP) or a high pressure (HP).

Other details, objects, and advantages of our hydrogen fueling system, hydrogen fuel generation, dispensing and storage apparatus, hydrogen fuel dispensing and storage apparatus, and methods of making and using the same will become apparent as the following description of certain exemplary embodiments thereof proceeds.

### BRIEF DESCRIPTION OF THE DRAWING

Exemplary embodiments of hydrogen fueling systems, hydrogen fuel generation, dispensing and storage apparatuses, hydrogen fuel dispensing and storage apparatuses, and methods of making and using the same are shown in the drawings included herewith. It should be understood that like reference characters used in the drawings may identify like components.
Figure 1 is a schematic diagram of a first exemplary embodiment of a hydrogen fuel generation, dispensing and storage apparatus.
Figure 2 is a schematic diagram of a second exemplary embodiment of a hydrogen fuel generation, dispensing and storage apparatus.
Figure 3 is a schematic diagram of a third exemplary embodiment of a hydrogen fuel generation, dispensing and storage apparatus.

### DETAILED DESCRIPTION

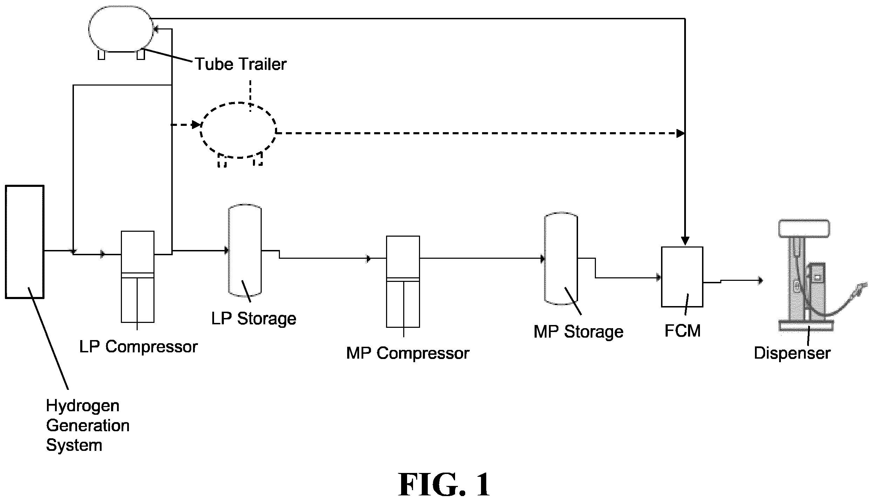

Referring to Figures 1-3 a hydrogen fuel generation, dispensing and storage apparatus can be provided at a single site so that hydrogen provided by a hydrogen generation system can be supplied to one or more dispensers of a fueling station on the same site. The hydrogen generation system can include, for example, an ammonia cracker system or a methane reformer system.

For example, the hydrogen generation system can include at least one methane reformer that reforms methane to form hydrogen (H₂). The reformer device can include, for example, a device based on steam reforming, autothermal reforming or partial oxidation that is configured to facilitate chemical synthesis to produce pure hydrogen gas from methane. For instance, a reformer device can include an autothermal reforming (ATR) device or a steam methane reforming (SMR) device. The devices can be configured to utilize a catalyst to facilitate the generation of the hydrogen at a relatively high temperature and pressure.

As another example, the hydrogen generation system can include an ammonia (NH₃) cracker system. The ammonia cracker system can be configured to crack ammonia to form hydrogen gas. Ammonia gas can be heated, vaporized, and subsequently cracked to form the hydrogen gas as well as other gas (e.g. nitrogen gas). The hydrogen gas that is formed via the cracker can be separated from the nitrogen gas for supplying to an on-site fueling station having one or more dispensers. The ammonia cracker can be configured to facilitate dissociation of ammonia gas at a high temperature (e.g. at a temperature of 800°C or other suitable temperature) at a pre-selected cracking pressure. A catalyst can also be utilized to facilitate cracking of the ammonia gas.

The hydrogen generation system can be configured to utilize a purification system or gas separation system to separate formed hydrogen gas from other gas (e.g. nitrogen, carbon dioxide, etc.). Such purification systems can include, for example, a pressure swing adsorption system (PSA) and/or a temperature swing adsorption system (TSA). Other types of purification systems can alternatively, or also, be utilized. In some embodiments, the hydrogen gas output from the hydrogen generation system can be purified so that the hydrogen output from the hydrogen generation system is at least 99 mol% hydrogen, at least 99.5 mole % (mol%) hydrogen, or at least 99.7 mol% hydrogen (e.g. within a range of between 99.7 mol% hydrogen to 99.999 mol% hydrogen.

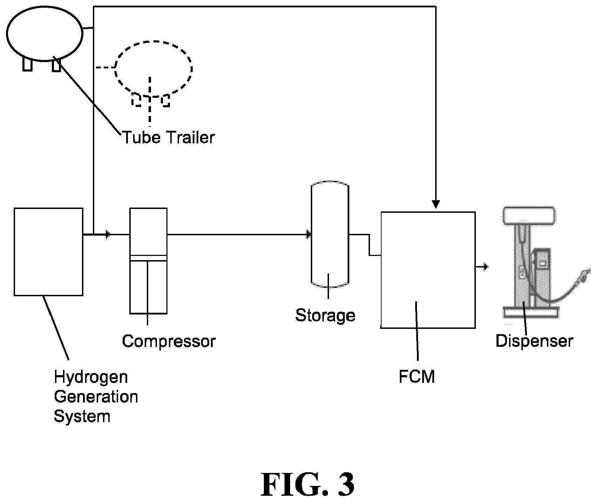

Hydrogen gas output from the hydrogen generation system can subsequently be fed from the hydrogen generation system to a first compressor, which can be a low pressure (LP) compressor (which can also be referred to as a LP compressor) or a moderate pressure (MP) compressor or high pressure (HP) compressor (see e.g. embodiment of Figure 3).

The hydrogen that is compressed via the first compressor can include hydrogen that is at least 99.97 mol% hydrogen in some embodiments. The hydrogen flow to be compressed can also include a concentration of impurities of up to 300 ppm (e.g. ranging from 0 ppm to 300 ppm) in some embodiments. The up to 300 ppm of impurities (e.g. impurities ranging from 0 ppm to 300 ppm as a cumulative total) can include water being present up to 5 ppm, total hydrocarbons except for methane or other single carbon equivalent hydrocarbons being up to 2 ppm, oxygen being up to 5 ppm, methane being up to 100 ppm, helium being up to 300 ppm, nitrogen being up to 300 ppm, argon being up to 300 ppm, carbon dioxide being up to 2 ppm, carbon monoxide being up to 0.2 ppm, total sulfur compounds being up to 0.004 ppm, formaldehyde being up to 0.2 ppm, formic acid being up to 0.2 ppm, ammonia being up to 0.1 ppm, and halogenated compounds being up to 0.05 ppm. It should be appreciated that the term "up to" refers to the impurity concentration of the impurity ranging from 0 to the upper limit value (e.g. 0-5 ppm for water, 0-100 ppm for methane, 0-300 ppm for nitrogen, 0-300 ppm for all the impurities present in the hydrogen flow, etc.).

A hydrogen feed conduit can be positioned to transport the hydrogen from the hydrogen generation system to the first compressor. The first compressor can be sized and configured to meet the flow rate of hydrogen (e.g. 25 kg/hr, between 5 kg/hr and 30 kg/hr, between 1 kg/hr and 50 kg/hr, etc.) that can be output from the hydrogen generation system. The first compressor can be sized and positioned for pressurizing the hydrogen for storage within at last one tube trailer via at least one tube trailer feed conduit and/or feed the hydrogen to another storage device (e.g. an LP storage vessel, an MP storage vessel, or other type storage vessel) via a first storage device feed conduit.

Each tube trailer can be a removeable and/or replaceable trailer. If a first trailer is full, the trailer can be replaced with an empty trailer to permit hydrogen to be stored therein or another trailer can be connected to provide additional removable storage so that additional excess hydrogen can be fed for storage into the added trailer (instead of removing and replacing the first trailer that has been filled).

Each storage vessel can be a single vessel or can be a storage unit that include a plurality of storage vessels. For example, in some embodiments, LP storage and MP storage can each be provided via a plurality of storage vessels arranged in a storage unit positioned on a particular storage location at a fuel dispensing site or other location adjacent the fuel dispensing site of the apparatus.

In some embodiments, the pressurization provided by the first compressor can pressurize the hydrogen to a pressure within a first pre-selected pressure range of 20MPa to 40MPa. Other embodiments (e.g. embodiment of Figure 3 utilizing a single first compressor), can utilize other pressures within different ranges (e.g. 20-80 MPa or 25-65 MPa, 35 MPa, 40 MPa, 45 MPa, 50 MPa, 55 MPa, 60 MPa, between 15 MPa and 65 MPa, etc.).

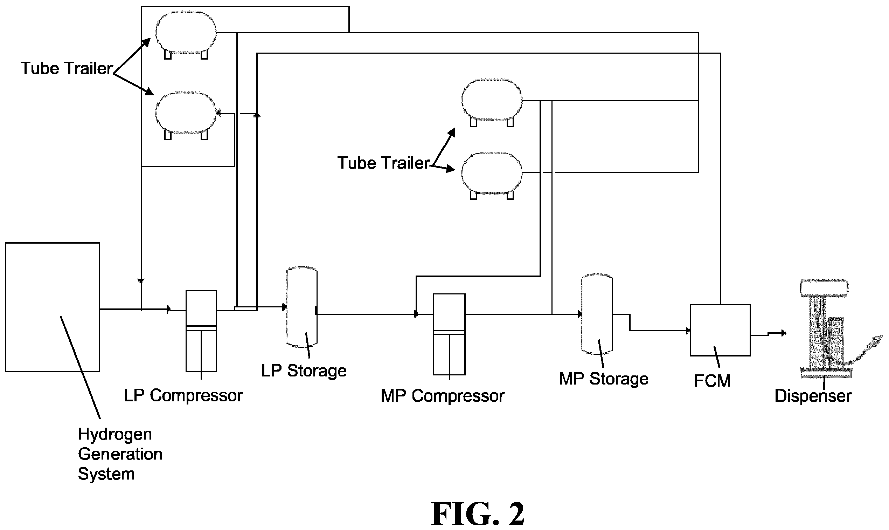

Embodiments can also utilize a second compressor (e.g. the MP compressor shown in Figures 1 and 2) configured to receive hydrogen from the first compressor or a first storage vessel positioned between the first compressor and the second compressor via a second compressor feed conduit. The second compressor can be configured to increase the pressure of hydrogen it receives from first storage vessel (e.g. LP storage vessel shown in Figures 1 and 2) or the first compressor to a higher second pressure within a pre-selected second pressure range (e.g. a pressure of between 30-80 MPa, a pressure between 30-70 MPa, etc.). The second compressor can output the hydrogen for feeding to a second storage vessel via a second storage feed conduit. The second storage vessel can be positioned and configured to retain and store the hydrogen at this second pressure level (e.g. the MP storage vessel shown in Figures 1 and 2) for feeding to a flow control manifold (FCM) via a FCM feed conduit. The FCM can also be positioned and configured to receive hydrogen from one or more tube trailers via one or more hydrogen tube trailer FCM feed conduits. The FCM can be in fluid connection with one or more dispensers of the fuel dispensing system for providing the hydrogen to the dispensers for dispensing into a fuel tank of one or more vehicles or other devices. The FCM can be configured to distribute the hydrogen to one or more dispensers of the fuel station at the same time for providing hydrogen to the dispensers for feeding fuel into fuel tanks of different vehicles or other devices positioned near the dispensers receiving the hydrogen. The feeding of the hydrogen at the dispensers can occur after or before payment for the hydrogen has been provided at the fuel station or fuel station dispenser kiosk.

Referring to the embodiment shown in Figure 1, one or more removable (or replaceable) tube trailers can receive LP hydrogen from the first compressor (e.g. the LP compressor) for providing excess storage capacity of hydrogen. Each tube trailer can be a removable and/or replaceable trailer. If a first trailer is full, the trailer can be replaced with an empty trailer (e.g. the trailer shown in broken line) to permit hydrogen to be stored therein or another trailer (e.g. the trailer shown in broken line) can be connected to provide additional removable storage so that additional excess hydrogen can be fed for storage into the added trailer (instead of removing and replacing the first trailer that has been filled).

The tube trailer or multiple tube trailers can then be configured to feed the LP hydrogen to the FCM to provide hydrogen directly to the FCM for dispensing when the demand for hydrogen exceed a flow of hydrogen that can be provided via the second storage vessel and hydrogen generation system. A controller can actuate valve adjustment for the conduits and other operational control units to change the flow path so that hydrogen output from the first compressor (e.g. the LP compressor) is no longer fed to the tube trailer when the tube trailer outputs hydrogen stored therein to the FCM for dispensing. Hydrogen generated via the hydrogen generation system can continue to feed hydrogen to the first compressor (e.g. the LP compressor) for being fed toward the FCM so the generated hydrogen is also fed to the FCM for meeting the demand of hydrogen at the same time the hydrogen from the one or more tube trailers is being fed to the FCM.

Referring to the embodiment shown in Figure 3, one or more tube trailers can receive LP hydrogen or MP hydrogen from the first compressor for providing excess storage capacity of hydrogen. Each tube trailer can be a removable and/or replaceable trailer. If a first trailer is full, the trailer can be replaced with an empty trailer (e.g. the trailer shown in broken line) to permit hydrogen to be stored therein or another trailer (e.g. the trailer shown in broken line) can be connected to provide additional removable storage so that additional excess hydrogen can be fed for storage into the added trailer (instead of removing and replacing the first trailer that has been filled).

The tube trailer or multiple tube trailers can then be configured to feed the hydrogen to the FCM to provide hydrogen directly to the FCM for dispensing when the demand for hydrogen exceeds a flow of hydrogen that can be provided via the second storage vessel and hydrogen generation system. A controller can actuate valve adjustment for the conduits and other operational control units to change the flow path for the hydrogen so that hydrogen output from the first compressor is no longer fed to the tube trailer when the tube trailer outputs hydrogen stored therein to the FCM for dispensing. Hydrogen generated via the hydrogen generation system can continue to feed hydrogen to the first compressor for being fed toward the FCM for meeting the demand of hydrogen at the same time the hydrogen from the one or more tube trailers is being fed to the FCM.

Referring to the embodiment shown in Figure 2, multiple first tube trailers can receive LP hydrogen from the LP compressor for providing excess storage capacity of hydrogen. Each first tube trailer can be a removable and/or replaceable trailer. If one of the first trailers becomes full, that trailer can be replaced with an empty trailer to permit hydrogen to be stored therein or another first trailer can be connected to provide additional removable storage so that additional excess hydrogen can be fed for storage into the added first trailer (instead of removing and replacing the first trailer that has been filled). The addition of another first trailer may be utilized instead of replacing a full trailer in situations where a great demand for hydrogen is anticipated and the additional storage capacity on-site may be needed, for example.

The first tube trailers can be configured to feed the hydrogen to the FCM to provide hydrogen directly to the FCM for dispensing when the demand for hydrogen exceeds a flow of hydrogen that can be provided via the MP storage vessel and hydrogen generation system. A controller can actuate valve adjustment of the conduits and other operational control units to change the flow path for the hydrogen so that hydrogen output from the first compressor is no longer fed to the first tube trailers so the first tube trailers output hydrogen stored therein to the FCM for dispensing. Hydrogen generated via the hydrogen generation system can continue to feed hydrogen to the first compressor for being fed toward the FCM for meeting the demand of hydrogen at the same time the hydrogen from the first tube trailers is being fed to the FCM.

Multiple second tube trailers can receive MP hydrogen from the second compressor (e.g. the MP compressor) for providing excess storage capacity of hydrogen as well. Each second tube trailer can be a removable and/or replaceable trailer. If one of the second trailers becomes full, that trailer can be replaced with an empty trailer to permit hydrogen to be stored therein or another second trailer can be connected to provide additional removable storage so that additional excess hydrogen can be fed for storage into the added second trailer (instead of removing and replacing the second trailer that has been filled). The addition of another second trailer may be utilized instead of replacing a full trailer in situations where a great demand for hydrogen is anticipated and the additional storage capacity on-site may be needed, for example.

The second tube trailers can be configured to feed the hydrogen to the FCM to provide hydrogen directly to the FCM for dispensing when the demand for hydrogen exceeds a flow of hydrogen that can be provided via the MP storage vessel and hydrogen generation system. A controller can actuate valve adjustment of the conduits and other operational control units to change the flow path for the hydrogen so that hydrogen output from the second compressor (e.g. the MP compressor) is no longer fed to the second tube trailers so the second tube trailers output hydrogen stored therein to the FCM for dispensing. Hydrogen generated via the hydrogen generation system can continue to feed hydrogen to the first compressor for being fed toward the second compressor for being fed to the FCM for meeting the demand of hydrogen at the same time the hydrogen from the second tube trailers is being fed to the FCM.

In the embodiment of Figure 2, hydrogen from one or more of the first tube trailers can be fed directly to the FCM at the same time hydrogen from one or more of the second tube trailers is fed directly to the FCM. This feeding of hydrogen can occur while hydrogen is also provided via the hydrogen generation system to the FCM (via the first and second compressors, etc.). A controller can actuate valve adjustment of the conduits and other operational control units to change the flow path for the hydrogen so that hydrogen is no longer fed to the second tube trailers and first tube trailers so the first tube trailers and second tube trailers output hydrogen stored therein to the FCM for dispensing. The entirety of hydrogen from the hydrogen generation system or related intermediate storage units can be fed to the FCM while the first and second tube-trailers are also utilized to feed hydrogen to the FCM for dispensing.

In yet other embodiments, the first and/or second tube-trailers can be configured to feed hydrogen to the flow of hydrogen upstream of the FCM for feeding to the FCM. For example, hydrogen stored in one or more first tube trailers can be fed toward the second compressor feed conduit for undergoing additional compression before being fed to the FCM instead of being fed directly to the FCM. Figures 1 and 2 illustrate such a feature by illustrating hydrogen distribution conduits for feeding hydrogen stored in one or more tube trailers to a first storage conduit so that this hydrogen is subsequently feedable to a second compressor. Figure 2 also illustrates a flow path option for distribution of hydrogen from second tube trailers so that the second tube trailers can feed hydrogen to the second storage vessel (MP storage) downstream of the second compressor for indirectly feeding hydrogen to the FCM instead of feeding the hydrogen directly to the FCM. A controller can actuate valve adjustment of the conduits and other operational control units to change the flow path for the hydrogen so that hydrogen is no longer fed to the first tube trailers so the first tube trailers output hydrogen stored therein to the second compressor for indirectly feeding the hydrogen to the FCM (e.g. embodiments of Figure 1 and Figure 2). A controller can also actuate valve adjustment of the conduits and other operational control units to change the flow path for the hydrogen so that hydrogen is no longer fed to the second tube trailers so the second tube trailers output hydrogen stored therein downstream of the second compressor for feeding to the second storage unit for indirectly feeding the hydrogen toward the FCM (e.g. Figure 2).

The hydrogen generation system can be configured to slow down its production of hydrogen or increase its production of hydrogen to account for the demand of fuel at the fueling station having at least one dispenser. Production of hydrogen can be adjusted to match up with the demand for hydrogen at the fueling station. When the hydrogen generation system is running at maximum speed and there isn't enough usage from the one or more dispensers, then the excess hydrogen gas can be passed into storage in at least one trailer (e.g. at least one tube trailer). In such situations, the hydrogen gas can be pressurized via the first compressor and subsequently fed into at least one trailer for storage therein, for example. The hydrogen pressurized within this first pressure range (e.g. between 20 MPa and 30 MPa, between 20 MPa and 70MPa, between 30MPa and 50 MPa, etc.) can be transported to one or more tube trailers via a tube trailer storage conduit positioned between the first compressor and the one or more tube trailers, for example.

In response to determining that there is a low demand for hydrogen dispensing at the one or more dispensers of the fueling station, the hydrogen generation system can be slowed to slow the rate of hydrogen production. This can be performed to try and operate the hydrogen generation system so that it can better match the actual hydrogen usage rate at the fueling station, for example. In some embodiments, the hydrogen generation system can be slowed from a maximum rate of production to a minimum rate of production, for example. The minimum rate of production can be about half of the full production capacity when the hydrogen generation system operates at a maximum production capacity in some embodiments (e.g. for some embodiments where the maximum production capacity is 25 kg/hr, the minimum production capacity may be 12.5 kg/hr, for example, in embodiments where the maximum production capacity can be 30 kg/hr, 20 kg/hr or between 35 kg.hr and 18 kg/hr, and the minimum production can be 15 kg/hr or 10kg/hr, or less than 12.5 kg/hr, etc.).

After the hydrogen generation system is slowed to a lower rate (e.g. a minimum production capacity), it can often take a significant amount of time for the production to be increased back to its maximum production capacity. For instance, in some embodiments, it can take about one hour for a hydrogen generation system to change operational output from a minimum output to a maximum hydrogen generation output after the operational capacity of the system has been adjusted. This lag can vary depending on the size, type (e.g. cracker or reformer, etc.), and operational capacity of the hydrogen generation system. This lag in output can be due to the time it can take for the hydrogen generation system to ramp up production from its prior minimum operational capacity setting to its maximum production setting after the hydrogen output adjustment has been made by a controller or operator. This type of lag can also occur in response to an adjustment from operation at maximum output rate to a minimum output rate (e.g. there can be about an hour before the hydrogen generation system output decreases to its minimum after it is adjusted to change output from its maximum output capacity to its minimum output capacity).

In situations where the hydrogen generation system is operating at a low operational output rate and the dispensing need at the one or more dispensers of the on-site fueling station increases to a level beyond that capacity, the additional hydrogen fuel that may be needed for dispensing at the one or more dispensers can be provided via the stored hydrogen retained in the one or more tube trailers. The use of stored hydrogen from the one or more trailers can also be provided in situations where the hydrogen generation system operates at a maximum capacity and the demand for hydrogen exceeds the hydrogen production capacity for a period of time.

For example, in the third embodiment illustrated in solid line in Figure 3, there can be a single compressor and a single trailer for providing this flexibility between storage and output for dispensing of hydrogen. In such embodiments, the single trailer can be configured to retain and store hydrogen gas at a pressure of either 20 MPa, 30 MPa, 40 MPa, 50 MPa, or other pre-selected first pressure storage pressure (e.g. a pressure between 20 MPa and 60 MPa or other pressure). The first, single compressor can be sized to meet the maximum and minimum flow rates of the hydrogen generation system (e.g. 25 kg/hr-12.5 kg/hr or 30 kg/hr-10 kg/hr for example, etc.). When the hydrogen generation system operates at maximum speed and there isn't enough usage from the dispenser, then excess hydrogen gas can be passed into the trailer for storage. If the production rate is slowed at the hydrogen generation system and the dispensing need for hydrogen increases unexpectedly at the on-site fueling station dispenser(s), then the required additional supply of hydrogen can be provided via the hydrogen stored in the tube trailer while the hydrogen generation system's production is increased to try and better match that new demand for hydrogen at the dispenser(s). The stored hydrogen can be output from the trailer and mixed with hydrogen output from the first compressor for being fed toward the fuel dispenser(s) for dispensing for indirectly feeding the hydrogen to the FCM or the stored hydrogen can be fed directly from the tube trailer to the FCM.

If additional hydrogen is needed, a second trailer full of hydrogen (shown in broken line in Figure 3) can be connected for providing additional hydrogen. In the event additional storage capacity is needed for storage and/or export of hydrogen generated from the hydrogen generation system, the second trailer can be connected as an empty trailer for being filled with additional hydrogen as well. A third trailer or other additional second trailers can also be added to provide additional storage capacity and/or more hydrogen capacity as well.

If the stored hydrogen is not expected to be needed, the single full trailer can be removed and replaced with a replacement first trailer that is empty. The replacement empty single trailer can then be filled with hydrogen. The removed full trailer can be transported via truck or rail to another site that may have a higher demand for hydrogen.

It should be understood that the single trailer arrangement for the embodiment shown in solid line in Figures 1 and 3 can permit the hydrogen fuel generation, dispensing and storage apparatus to allow for importing of hydrogen or exporting of hydrogen. For instance, when the trailer is full, the trailer can be transported off-site to another fueling station and an empty replacement trailer can then be connected to replace the removed trailer used to export hydrogen to the other station. As another example, if the trailer is empty and stored hydrogen may be needed, the empty trailer can be replaced with a full replacement trailer to provide additional hydrogen capacity at the station for fueling at the one or more dispensers or another full trailer can be connected for providing additional hydrogen (e.g. a full second additional trailer shown in broken line in Figures 1 and 3 can be added into system for providing additional hydrogen for the fueling station).

In the embodiment shown in Figure 2 and the embodiments shown in Figures 1 and 3 which may utilize the additional second trailers shown in broken line, multiple trailers can be utilized for storage and subsequent use of hydrogen to meet hydrogen dispensing demands at the on-site fueling station. For example, there can be multiple tube trailers positioned for storage of hydrogen. In some arrangements (e.g. the embodiment of Figure 2), one or more first trailers can be configured for storing hydrogen at a first pressure or first pressure level and other second trailers can be configured and positioned for storage at a second pressure level or second pressure. Additional trailers can provide additional storage capacity at different pressure levels (e.g. third trailers can be included that can be utilized as additional first trailers and/or additional second trailers). Further, one or more of the trailers can be arranged to provide hydrogen to at least one fuel dispenser directly from the trailer(s) to increase station capacity and save energy.

In the multiple trailer embodiment shown in Figure 2, for example, the lower pressure trailers can store hydrogen at a first pressure level (e.g. a pressure between 20 MPa and 30 MPa or 20 and 40 MPa) and the higher pressure trailers can store hydrogen at a second pressure level that is higher than the first pressure level (e.g. a pressure of over 30 MPa, a pressure of between 40 MPa and 70 MPa, a pressure in the range of 50 MPa-70 MPa, etc.). The trailer storage provided by the multiple trailers can allow for matching of usage with hydrogen production provided by the hydrogen generation system. Further, utilization of more than one trailer at each pressure level at the station can enable trailers to be removed as they become full or to be replaced as they become empty so that the trailers can be used to match the station demand. This can allow the trailers of the hydrogen fuel generation, dispensing and storage apparatus to provide both import and export capability. For instance, when a trailer is full, the trailer can be transported off-site to another fueling station and an empty replacement trailer can then be connected to replace the removed full trailer used to export hydrogen to another station. As another example, if a trailer is empty and stored hydrogen may be needed, the empty trailer can be replaced with a full replacement trailer to provide additional hydrogen capacity at the station for fueling at the one or more dispensers (e.g. permitting hydrogen to be imported via one or more trailers being delivered to the site). It should be appreciated that the transportation of the tube trailer(s) to or from the fueling station site or site of the apparatus for hydrogen importation as well as for hydrogen exportation can be via truck driving the trailers along roadways and/or via rail transportation.

Of course, some embodiments can be configured to only utilize one or more trailers positioned for storage of hydrogen at the same pressure. The Embodiments of Figures 1 and 3 using only a single trailer as indicated in solid line or using multiple trailers as indicated via broken line illustrate exemplary arrangements for such embodiments.

The use of the removable and replaceable trailers for providing excess hydrogen storage capacity and/or hydrogen exporting capacity can provide improved operational flexibility. For example, in some embodiments, the trailers can be removed and replaced to account for low and high hydrogen fueling demand times at a particular on-site fueling station. For instance, a site operator can manage the hydrogen production process and use of trailers so that a first full trailer is to be replaced by another empty trailer or additional full trailers are to be connected to replace an empty trailer as required for that station's anticipated hydrogen usage cycle. The exporting and importing of full trailers can be managed to account for the on-site fueling station's anticipated hydrogen usage each day and the cycle each day that may exist between low demand time periods (e.g. time periods where few vehicles may obtain fuel from the one or more dispensers of the fueling station) and high demand time periods (e.g. time periods where many vehicles obtain fuel from one or more dispensers of the fueling station).

The scheduling of replacing trailers or adding additional trailers can be designed to implement a time of day strategy for the removable trailers as well. For example, if fueling by customers or users typically takes place during a particular fuel demand time period (e.g. from 8 PM to 4 AM), then an operator may want to have at least one full trailer connected and ready to provide hydrogen to meet the start of the anticipated high demand time (e.g. at 8 PM for the exemplary 8 PM to 4 AM fuel demand time period) and also have at least one empty trailer available at the end of the fuel demand time period (e.g. at 4 AM for the exemplary 8 PM to 4 AM fuel demand time period) for being filled to provide additional hydrogen storage capacity for the start of the next high demand cycle (e.g. 8 PM for the exemplary 8 PM to 4 AM fuel demand time period).

It should be understood that the scheduling of adding or replacing of trailers can be adjusted to meet a particular site's needs. The use of the trailers can also permit flexibility to address situations where unexpected demand for hydrogen occurs or a substantial increase in the demand for hydrogen may occur unexpectedly. For example, in response to an unexpected demand occurrence being detected, trailers can be transported to a site and/or full trailers that may be on site, but not connected to the distribution system can be connected to the system to provide additional hydrogen for meeting the unexpected demand.

It should be appreciated that embodiments of hydrogen fueling systems, hydrogen fuel generation, dispensing and storage apparatuses, hydrogen fuel dispensing and storage apparatuses, and methods of making and using the same can each be configured to include process control elements positioned and configured to monitor and control operations (e.g. temperature and pressure sensors, flow sensors, an automated process control system having at least one work station that includes a processor, non-transitory memory and at least one transceiver for communications with the sensor elements, valves, and controllers for providing a user interface for an automated process control system that may be run at the work station and/or another computer device of the apparatus, etc.).

It should be appreciated that modifications to the embodiments explicitly shown and discussed herein can be made to meet a particular set of design objectives or a particular set of design criteria. For instance, the arrangement of valves, piping, and other conduit elements (e.g. conduit connection mechanisms, tubing, seals, etc.) for interconnecting different units of the apparatus for fluid communication of the flows of fluid between different units can be arranged to meet a particular layout design that accounts for available area of the fuel system, sized equipment of the system, and other design considerations. As another example, the flow rate, pressure, and temperature of the fluid passed through the different elements of the apparatus as well as passed through other apparatus elements can vary to account for different fuel system design configurations and other design criteria. As yet another example, the material composition for the different structural components of the apparatus can be any type of suitable materials as may be needed to meet a particular set of design criteria.

As another example, it is contemplated that a particular feature described, either individually or as part of an embodiment, can be combined with other individually described features, or parts of other embodiments. The elements and acts of the various embodiments described herein can therefore be combined to provide further embodiments. Thus, while certain exemplary embodiments of hydrogen fueling systems, hydrogen fuel generation, dispensing and storage apparatuses, hydrogen fuel dispensing and storage apparatuses, and methods of making and using the same have been shown and described above, it is to be distinctly understood that the invention is not limited thereto but may be otherwise variously embodied and practiced within the scope of the following claims.

## Claims

1. A hydrogen fuel dispensing and storage apparatus, comprising:
a first compressor positioned to receive hydrogen from a hydrogen generation system;
a flow control manifold (FCM), positioned downstream of the first compressor to receive the hydrogen for feeding to at least one dispenser; and
at least one first trailer positioned between the first compressor and the FCM such that hydrogen output from the first compressor is feedable to the at least one first trailer for storage while a demand for hydrogen at the FCM for dispensing at the at least one dispenser is below a rate of hydrogen being fed to the first compressor and hydrogen from the at least one first trailer is passable to the FCM while the demand for hydrogen at the FCM for dispensing at the at least one dispenser is greater than the rate of hydrogen being fed to the first compressor.

2. The hydrogen fuel dispensing and storage apparatus of claim 1, comprising:
a second compressor positioned between the first compressor and the FCM to increase pressure of the hydrogen output from the first compressor from a first pressure to a second pressure that is higher than the first pressure before the hydrogen is fed to the FCM.

3. The hydrogen fuel dispensing and storage apparatus of claim 2, comprising:
a first storage vessel between the first compressor and the second compressor for storage of the hydrogen output from the first compressor prior to the hydrogen being fed to the second compressor; and/or
a second storage vessel between the second compressor and the FCM for storage of the hydrogen output from the second compressor prior to the hydrogen being fed to the FCM for dispensing.

4. The hydrogen fuel dispensing and storage apparatus of claim 2 or claim 3, comprising:
at least one second trailer positioned between the second compressor and the FCM such that hydrogen output from the second compressor is feedable to the at least one second trailer for storage while a demand for hydrogen at the FCM for dispensing at the at least one dispenser is below a rate of hydrogen being fed to the first compressor and the hydrogen from the at least one second trailer is passable to the FCM while the demand for hydrogen at the FCM for dispensing at the at least one dispenser is greater than the rate of hydrogen being fed to the first compressor.

5. The hydrogen fuel dispensing and storage apparatus of any one of the preceding claims, wherein the hydrogen fuel dispensing and storage apparatus is a hydrogen fuel generation, dispensing and storage apparatus that includes the hydrogen generation system.

6. The hydrogen fuel dispensing and storage apparatus of claim 5, wherein the hydrogen generation system includes an ammonia cracker or a methane reformer that has at least one reformer device.

7. A hydrogen fuel generation, dispensing and storage apparatus, comprising:
a hydrogen generation system that includes an ammonia cracker or a methane reformer that has at least one reformer device;
a first compressor positioned to receive hydrogen from the hydrogen generation system;
at least one dispenser positioned to dispense the hydrogen to a vehicle;
a flow control manifold (FCM), positioned downstream of the first compressor and upstream of the at least one dispenser to receive the hydrogen for feeding to the at least one dispenser;
a second compressor positioned between the first compressor and the FCM to increase pressure of the hydrogen output from the compressor from a first pressure to a second pressure that is higher than the first pressure before the hydrogen is fed to the FCM;
a first storage vessel positioned between the first compressor and the second compressor for storage of the hydrogen output from the first compressor prior to the hydrogen being fed to the second compressor; and
a second storage vessel positioned between the second compressor and the FCM for storage of the hydrogen output from the second compressor prior to the hydrogen being fed to the FCM for dispensing; and
at least one of:
at least one first trailer positioned between the first compressor and the FCM such that hydrogen output from the first compressor is feedable to the at least one first trailer for storage while a demand for hydrogen at the FCM for dispensing at the at least one dispenser is below a rate of hydrogen being fed to the first compressor and hydrogen from the at least one first trailer is passable to the FCM while the demand for hydrogen at the FCM for dispensing at the at least one dispenser is greater than the rate of hydrogen being fed to the first compressor; and
at least one second trailer positioned between the second compressor and the FCM such that hydrogen output from the second compressor is feedable to the at least one second trailer for storage while a demand for hydrogen at the FCM for dispensing at the at least one dispenser is below a rate of hydrogen being fed to the first compressor and the hydrogen from the at least one second trailer is passable to the FCM while the demand for hydrogen at the FCM for dispensing at the at least one dispenser is greater than the rate of hydrogen being fed to the first compressor.

8. The apparatus of any one of the preceding claims, wherein:
the at least one first trailer is a single trailer or is multiple trailers; and
the at least one first trailer is positioned and configured so that the hydrogen stored in the at least one first trailer is directly feedable to the FCM while the demand for hydrogen at the FCM for dispensing at the at least one dispenser is greater than the rate of hydrogen being fed to the first compressor.

9. The apparatus of any one of the preceding claims, wherein the at least one first trailer and/or the at least one second trailer is/are positioned and configured to feed hydrogen to the flow of hydrogen upstream of the FCM.

10. A method of generating, storing and/or dispensing hydrogen, comprising:
compressing hydrogen received from hydrogen generation system to a first pressure;
feeding the hydrogen to a flow control manifold (FCM) for feeding to at least one dispenser;
in response to demand for hydrogen at the FCM for dispensing at the at least one dispenser being below a rate of hydrogen being fed to the first compressor, feeding at least a portion of the hydrogen output from the first compressor to at least one first trailer positioned between the first compressor and the FCM such that hydrogen output from the first compressor is feedable to the at least one first trailer for storage; and
in response to the demand for hydrogen at the FCM for dispensing at the at least one dispenser being greater than the rate of hydrogen being fed to the first compressor, outputting hydrogen stored in at least one first trailer to the FCM for dispensing at the at least one dispenser.

11. The method of claim 10, comprising:
feeding the hydrogen at the first pressure to a second compressor positioned between the first compressor and the FCM to increase pressure of the hydrogen to a second pressure that is higher than the first pressure before the hydrogen is fed to the FCM.

12. The method of claim 11, comprising:
in response to the demand for hydrogen at the FCM for dispensing at the at least one dispenser being below a rate of hydrogen being fed to the first compressor, feeding at least a portion of the hydrogen output from the second compressor to at least one second trailer positioned between the second compressor and the FCM such that hydrogen output from the first compressor is feedable to the at least one second trailer for storage; and
in response to the demand for hydrogen at the FCM for dispensing at the at least one dispenser being greater than the rate of hydrogen being fed to the first compressor, outputting hydrogen stored in at least one second trailer to the FCM for dispensing at the at least one dispenser.

13. The method of any one of the claims 10 to 12, wherein:
the at least one first trailer is a single trailer or is multiple trailers; and
the hydrogen stored in the at least one first trailer is directly fed to the FCM while the demand for hydrogen at the FCM for dispensing at the at least one dispenser is greater than the rate of hydrogen being fed to the first compressor.

14. The apparatus of any one of the claims 1 to 9 and/or the method of any one of the claims 10 to 13, wherein the at least one first trailer comprises at least one removable tube trailer and/or the at least one second trailer comprises at least one removable tube trailer.

15. The apparatus of claim 7 or any one of the claims 1 to 6, 8 and 9 each in combination with claim 4 or the method of any one of the claims 10 to 14 each in combination with claim 13, wherein:
the at least one second trailer is positioned and configured so that the hydrogen stored in the at least one second trailer is directly feedable to the FCM while the demand for hydrogen at the FCM for dispensing at the at least one dispenser is greater than the rate of hydrogen being fed to the first compressor; and
the at least one first trailer is positioned and configured so that the hydrogen stored in the at least one first trailer is directly feedable to the FCM while the demand for hydrogen at the FCM for dispensing at the at least one dispenser is greater than the rate of hydrogen being fed to the first compressor.
